# EUROPEAN PATENT APPLICATION

(11) **EP 3 936 203 A1**
(43) Date of publication of application: **12.01.2022**
(21) Application number: 20810241.8
(22) Date of filing: 29.04.2020
(51) Int. Cl.: A63F 1/14, A63F 11/00

(54) **DEALING METHOD, GAME METHOD, DEVICE, AND STORAGE MEDIUM**

(30) Priority: 22.05.2019 CN 201910430885
(71) Applicant: Hangzhou Fuzamei Technology Co. Ltd, HangZhou, Zhejiang 310000 (CN)
(72) Inventor: ZHIWEN, Wang, Hangzhou, Zhejiang 310000 (CN); WU, Sijin, Hangzhou, Zhejiang 310000 (CN)
(74) Representative: Miao, Tianhao
(86) International application number: PCT/CN2020/087829
(87) International publication number: WO 2020/233377

(57) **Abstract**

The present invention provides a dealing method, method and device for a game and storage medium. The dealing method comprises the following steps: generating a first key by means of an algorithm supporting out-of-order decryption, and recording a hash value of the first key onto a block chain; generating a plurality pieces of card face information and corresponding scramble information, and respectively encrypting the card face information and the corresponding scramble information by means of the first key; sending each encrypted card face information to another client for reshuffling by other clients in sequence; receiving each encrypted card face information broadcast by the client which shuffles finally, and determining a plurality pieces of card face information allocated to a current user; generating a plurality pieces of first decryption request information and sending same to another client for decryption by other clients in sequence, and returning a plurality of first decryption results; decrypting the first decryption results by means of the first key to acquire each card face information allocated to the current user; decrypting a plurality pieces of second decryption request information sent by other clients by means of the first key to generate second decryption results, and sending same to the next client. The present invention realizes decentralized dealing.

## Description

### Technical Field

The present application relates to the technical field of decentralized games, and in particular to a dealing method, method and device for a game and storage medium.

### Background

Of the current card games, both the centralized game and the decentralized game cannot realize decentralized dealing, so only the scheme of centralized dealing is used.

Centralized dealing results in the dealer knowing cards of all players, so once the dealer divulges the dealing information or the dealer cheats, the fairness of the game may be affected.

### Summary

In view of the above defects or disadvantages in the prior art, the present invention aims to provides a dealing method, method and device for a game and storage medium which can realize decentralized dealing.

In a first aspect, the present invention provides a dealing method, comprising the following steps:
generating a first key by means of an algorithm supporting out-of-order decryption, and recording a hash value of the first key onto a block chain, wherein other clients participating in the current round of game respectively generate keys by means of the algorithm and record the hash values of the generated keys onto the block chain;
generating a plurality pieces of card face information and corresponding scramble information, and respectively encrypting all the card face information and the corresponding scramble information by means of the first key to generate a plurality pieces of encrypted card face information that are encrypted for the first time;
sending each encrypted card face information to another client participating in the current round of game for reshuffling by other clients participating in the current round of game in sequence, until all clients participating in the current round of game complete shuffling, wherein the reshuffling comprises: respectively encrypting all the received encrypted card face information by means of the key generated according to the algorithm;
receiving each encrypted card face information broadcast after the client which shuffles finally in the current round of game completes reshuffling, and determining a plurality pieces of card face information allocated to a current user according to a pre-configured card taking rule;
generating a plurality pieces of first decryption request information according to all the allocated encrypted card face information and sending same to another client participating in the current round of game for decryption by other clients participating in the current round of game in sequence by means of the key generated according to the algorithm, and returning a plurality of first decryption results by the client performing decryption finally of other clients;
decrypting all the first decryption results by means of the first key, identifying and filtering the scramble information to acquire each card face information allocated to the current user;
receiving a plurality pieces of second decryption request information sent by other clients participating in the current round of game, decrypting the second decryption request information by means of the first key to generate second decryption results, and sending same to the next client.

In a second aspect, the present invention provides another dealing method, comprising the following steps:
generating a second key by means of an algorithm supporting out-of-order decryption, and recording a hash value of the second key onto a block chain, wherein other clients participating in the current round of game respectively generate keys by means of the algorithm and record the hash values of the generated keys onto the block chain;
receiving a plurality of pieces of encrypted card face information sent by another client participating in the current round of game, wherein the encrypted card face information are encrypted card face information that are encrypted for the first time or encrypted card face information that are re-encrypted; the encrypted card face information that are encrypted for the first time are generated by generating a plurality of card face information and corresponding scramble information by the first client initiating shuffling in the current round of game, and respectively encrypting all the card face information and the corresponding scramble information by means of the first key generated according to the algorithm, and are sent to another client participating in the current round of game for reshuffling by other clients participating in the current round of game in sequence; the reshuffling comprises: respectively encrypting all the received encrypted card face information by means of the key generated according to the algorithm, and generating encrypted card face information that are re-encrypted;
respectively encrypting all the received encrypted card face information by means of the second key, and judging whether all the clients participating in the current round of game complete shuffling;
if not, sending all the encrypted card face information encrypted by means of the second key to the next client which does not complete shuffling in the current round of game for reshuffling, and waiting to receive all the encrypted card face information broadcast after the client which shuffles finally in the current round of game completes reshuffling;
if yes, broadcasting all the encrypted card face information encrypted by means of the second key to all the clients participating in the current round of game;
determining a plurality pieces of card face information allocated to a current user according to a preconfigured drawing rule;
generating a plurality pieces of third decryption request information according to all the allocated encrypted card face information and sending same to another client participating in the current round of game for decryption by other clients participating in the current round of game in sequence by means of the key generated according to the algorithm, and returning a plurality of third decryption results by the client performing decryption finally of other clients;
decrypting all the third decryption results by means of the second key, identifying and filtering the scramble information to acquire each card face information allocated to the current user;
receiving a plurality pieces of fourth decryption request information sent by other clients participating in the current round of game, decrypting the fourth decryption request information by means of the second key to generate fourth decryption results, and sending same to the next client.

In a third aspect, the present invention further provides a method for a game, comprising the following steps:
dealing cards according to any one of the above dealing methods;
sending leading information during a game to lead cards, wherein the leading information comprise first card face information about led cards, first encrypted card face information generated by shuffling the first card face information by all the clients participating in the current round of game in sequence, and signature information about a current user;
after the current round of game is over, publishing the key generated by a current client, packaging the result information about the current round of game and recording same onto a block chain for performing settlement of the current round by a game contract configured on the block chain.

In a fourth aspect, the present invention also provides a device which comprises one or more processors and a memory, wherein the memory comprises instructions that can be executed by the one or more processors so that the one or more processors execute the method provided according to various embodiments of the present invention.

In a fifth aspect, the present invention also provides a storage medium which stores computer programs. The computer programs enable a computer to execute the method provided according to various embodiments of the present invention.

By means of the dealing method, method and device for a game and storage medium provided in numerous embodiments of the present invention, by respectively generating keys according to an algorithm supporting out-of-order decryption by all clients participating in a game and encryption recording same onto a block chain, respectively performing encryption shuffling on card face information of the current round of game by means of respective keys in sequence, decrypting the encrypted card face information about a current user by other clients in sequence after drawing, and decrypting by the current client finally, decentralized dealing is realized in a game scenario where only the players themselves know their cards after drawing.

By means of the dealing method, method and device for a game and storage medium provided in some embodiments of the present invention, further, by attaching the signature of the current user when requesting other clients to decrypt, to guarantee that illegal decryption requests may be checked after all users publish respective keys, cheating in the decryption stage is avoided.

By means of the method and device for a game and storage medium provided in some embodiments of the present invention, further, by attaching the encrypted card face information and the signature of the current user in the leading phase, to guarantee that illegal leading of a user may be checked after all users publish respective keys, cheating in the leading stage is avoided.

By means of the method and device for a game and storage medium provided in some embodiments of the present invention, further, by performing local settlement according to keys locally broadcast mutually before submitting the game result to the block chain, the calculation amount of the game contract on the block chain is reduced, and the performance of a decentralized game system is further improved.

### Description of Drawings

By reading and referring to the detailed description of the non-limiting embodiments in the following drawings, other features, purposes and advantages of the present application will become more apparent.
Fig. 1 is a flow chart of one dealing method provided in one embodiment of the present invention.
Fig. 2 is a flow chart of another dealing method provided in one embodiment of the present invention.
Fig. 3 is a flow chart of a method for a game provided in one embodiment of the present invention.
Fig. 4 is a flow chart of one preferred embodiment of the method shown in Fig. 3.
Fig. 5 is a flow chart of another preferred embodiment of the method shown in Fig. 3.
Fig. 6 is a structural schematic diagram of a device provided in one embodiment of the present invention.

### Detailed Description

The present application will be further described in detail below in combination with the drawings and the embodiments. It should be understood that the specific embodiments described herein are only used for explaining the relevant invention, not used for limiting the invention. In addition, it should be noted that for ease of description, the drawings only show portions related to the present invention.

It should be explained that if there is no conflict, the embodiments in the present application and the features in the embodiments can be mutually combined. The present application will be described in detail below by reference to the drawings and in conjunction with the embodiments.

Common dealing scenarios of card games are divided into the following two categories:
cards held by a player are made public to all other players, for example, in various dummy games;
cards held by a player are known only to himself/herself, but are not known to all other players, for example, in Fight the Landlord, Two-liter and other non-dummy games.

The dealing method proposed in this patent is used to realize decentralized dealing in the latter dealing scenario, while the scheme of decentralized dealing in the former dealing scenario will be proposed in another patent application.

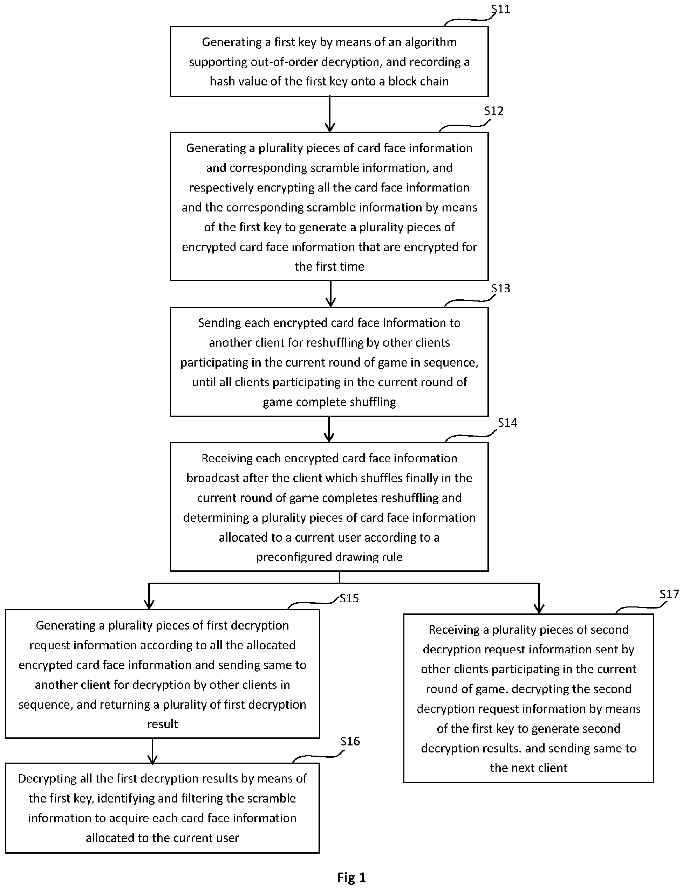

Fig. 1 is a flow chart of one dealing method provided in one embodiment of the present invention. As shown in Fig. 1, in this embodiment, the present invention provides a dealing method, comprising the following steps:
S11: generating a first key by means of an algorithm supporting out-of-order decryption, and recording a hash value of the first key onto a block chain, wherein other clients participating in the current round of game respectively generate keys by means of the algorithm and record the hash values of the generated keys onto the block chain;
S12: generating a plurality pieces of card face information and corresponding scramble information, and respectively encrypting all the card face information and the corresponding scramble information by means of the first key to generate a plurality pieces of encrypted card face information that are encrypted for the first time;
S13: sending each encrypted card face information to another client participating in the current round of game for reshuffling by other clients participating in the current round of game in sequence, until all clients participating in the current round of game complete shuffling, wherein the reshuffling comprises: respectively encrypting all the received encrypted card face information by means of the key generated according to the algorithm;
S14: receiving each encrypted card face information broadcast after the client which shuffles finally in the current round of game completes reshuffling, and determining a plurality pieces of card face information allocated to a current user according to a preconfigured drawing rule;
S15: generating a plurality pieces of first decryption request information according to all the allocated encrypted card face information and sending same to another client participating in the current round of game for decryption by other clients participating in the current round of game in sequence by means of the key generated according to the algorithm, and returning a plurality of first decryption results by the client performing decryption finally of other clients;
S16: decrypting all the first decryption results by means of the first key, identifying and filtering the scramble information to acquire each card face information allocated to the current user;
S17: receiving a plurality pieces of second decryption request information sent by other clients participating in the current round of game, decrypting the second decryption request information by means of the first key to generate second decryption results, and sending same to the next client.

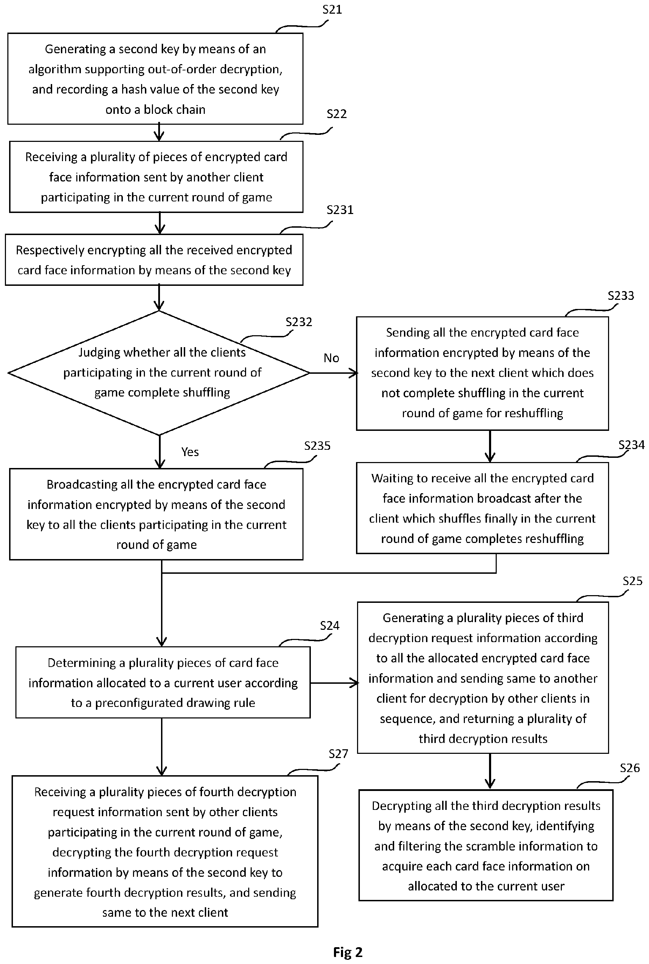

Fig. 2 is a flow chart of another dealing method provided in one embodiment of the present invention. As shown in Fig. 2, in this embodiment, the present invention further provides another dealing method, comprising the following steps:
S21: generating a second key by means of an algorithm supporting out-of-order decryption, and recording a hash value of the second key onto a block chain, wherein other clients participating in the current round of game respectively generate keys by means of the algorithm and record the hash values of the generated keys onto the block chain;
S22: receiving a plurality of pieces of encrypted card face information sent by another client participating in the current round of game, wherein the encrypted card face information are encrypted card face information that are encrypted for the first time or encrypted card face information that are re-encrypted; the encrypted card face information that are encrypted for the first time are generated by generating a plurality of card face information and corresponding scramble information by the first client initiating shuffling in the current round of game, and respectively encrypting all the card face information and the corresponding scramble information by means of the first key generated according to the algorithm, and are sent to another client participating in the current round of game for reshuffling by other clients participating in the current round of game in sequence; the reshuffling comprises: respectively encrypting all the received encrypted card face information by means of the key generated according to the algorithm, and generating encrypted card face information that are re-encrypted;
S231: respectively encrypting all the received encrypted card face information by means of the second key;
S232: judging whether all the clients participating in the current round of game complete shuffling:
   if not, executing step S233: sending all the encrypted card face information encrypted by means of the second key to the next client which does not complete shuffling in the current round of game for reshuffling, and
S234: waiting to receive all the encrypted card face information broadcast after the client which shuffles finally in the current round of game completes reshuffling;
   if yes, executing step S235: broadcasting all the encrypted card face information encrypted by means of the second key to all the clients participating in the current round of game;
S24: determining a plurality pieces of card face information allocated to a current user according to a preconfigured drawing rule;
S25: generating a plurality pieces of third decryption request information according to all the allocated encrypted card face information and sending same to another client participating in the current round of game for decryption by other clients participating in the current round of game in sequence by means of the key generated according to the algorithm, and returning a plurality of third decryption results by the client performing decryption finally of other clients;
S26: decrypting all the third decryption results by means of the second key, identifying and filtering the scramble information to acquire each card face information allocated to the current user;
S27: receiving a plurality pieces of fourth decryption request information sent by other clients participating in the current round of game, decrypting the fourth decryption request information by means of the second key to generate fourth decryption results, and sending same to the next client.

Specifically, the method shown in Fig. 1 is executed by a client initiating shuffling of a plurality of clients participating in a round of game, and the method shown in Fig. 2 is executed by other clients participating in the round of game. In this embodiment, which client initiates shuffling in a round of game is randomly designated according to a preconfigured method, and programs for executing the methods shown in Fig. 1 and Fig. 2 are configured in all the clients respectively. In other embodiments, in special game scenarios, a certain client may be designated to initiate shuffling (programs for executing the method shown in Fig. 1 are configured in the client) according to actual demands, and other clients may be designated to participate in shuffling (programs for executing the method shown in Fig. 2 are configured in other clients).

In this embodiment, all the clients generate keys by means of an RSA algorithm, specifically, the keys generated by means of the RSA algorithm comprise key pairs (p, P), perform encryption by means of P, perform out-of-order decrypted by means of p, and all the clients keep respective generated key pairs (p, P) confidential in the whole dealing process and publish respective generated key pairs (p, P) only after the current round of game is over. In more embodiments, keys may be generated by means of other algorithms supporting out-of-order decryption and unable to derive keys according to the original text and ciphertext (for example, A=m(a), given the original text a and ciphertext A, the key m cannot be derived), for example, a single key is generated when the aes algorithm is used, and the same technical effect is realized by performing encryption and out-of-order decryption by means of the key.

By taking the RSA algorithm used by all clients when dealing in the Two-liter game in which clients A, B, C, D of users A, B, C, D use two packs of playing cards (108 cards) as an example, the method shown in Fig. 1 and the method shown in Fig. 2 are exemplarily illustrated.

After the current round of game is started, it is determined that the user A initiates shuffling in the current round of game according to a pre-configured algorithm (for example, sequencing according to the address of each user and the hash value of the time stamp of the starting of the current round of game, sequencing according to the address of each user and the hash value of the random number provided by the block chain, or the like):
the client A executes step S11, the clients B, C, D execute step S21, the clients A, B, C, D respectively generate key pairs (p_{A}, P_{A}), (p_{B}, P_{B}), (p_{C}, P_{C}) and (p_{D}, P_{D}) according to the RSA algorithm, respectively generate hash values HA=(p_{A}+P_{A}), HB=(p_{B}+P_{B}), HC=(p_{C}+P_{C}) and HD=(p_{D}+P_{D}), and respectively record HA, HB, HC and HD onto the block chain.

Preferably, in steps S11 and S21, all the clients also respectively pay deposits for the current round of game in the transaction of packaging the hash values and submitting same to the block chain, the game contract configured on the block chain freezes the deposits in the game contract at the time the transaction is executed so as to deduct his/her deposit and compensate the rest of the users when a certain user is detected cheating finally. In other embodiments, the clients may be configured to pay no deposit according to actual demands, pay deposits before the game, or the like.

After executing step S11, the client A executes steps S12 and S13:
in step S12, the client A generates 108 sets of card face information and corresponding scramble information according to the number (108) of cards required to be used in the current round of game, for example, the card face information are configured to be i=1,2...,54 which represent 54 cards of a first pack of playing cards and i=55,...,108 which represent 54 cards of a second pack of playing cards (the specific correlation may be configured randomly, may be preconfigured, or may be configured temporarily as long as other clients preconfigure or receive the same correlation table during shuffling), the scramble information corresponding to the card face information are configured to be n(i)=hash(p_{A}+i), all card face information i and corresponding scramble information n(i) are encrypted through P_{A} respectively to generate encrypted card face information E_{A}(i)= P_{A}(n(i)+i) encrypted for the first time;
in step S13, the client A sends all the encrypted card face information E_{A}(1)-E_{A}(108) generated in step S12 to the client D (taking the randomly configured encryption shuffling order ADCB as an example, which may be randomly configured as ACBD, ABDC, or other random orders).

The client D executes steps S22 and S23 (S231-S235) at this moment:
in step S231, the client D performs encryption on the received E_{A}(1)-E_{A}(108) respectively according to P_{D}, to generate E_{D}(i)=P_{D}(E_{A}(i)). It should be noted here that although the client A can identify the card face information I corresponding to E_{A}(I), the client D cannot identify the correlation between E_{A}(I) and i. Therefore, after the client D completes encryption, all the clients A, B, C, D cannot identify the correlation between E_{D}(I) and I;
in step S232, the client D judges that the clients B and C have not shuffled the cards yet according to the randomly configured encryption shuffling order ADCB, thereby executing step S233: sending E_{D}(1)-E_{D}(108) generated in step S231 to the client C, and executing step S234: waiting to receive all the encrypted card face information broadcast after the client B completes reshuffling.

The client C also executes steps S22 and S23 at this moment:
in step S231, the client C performs encryption on the received E_{D}(1)-E_{D}(108) respectively according to P_{C}, to generate E_{C}(i)=P_{C}(E_{D}(i));
in step S232, the client C judges that the client B has not shuffled the cards yet according to the randomly configured encryption shuffling order ADCB, thereby executing step S233: sending E_{C}(1)-E_{C}(108) generated in step S231 to the client B, and executing step S234: waiting to receive all the encrypted card face information broadcast after the client B completes reshuffling.

The client B also executes steps S22 and S23 at this moment:
in step S231, the client B performs encryption on the received E_{C}(1)-E_{C}(108) respectively according to P_{B}, to generate E_{B}(i)= P_{B}(E_{C}(i));
in step S232, the client B judges that all the clients participating in the current round of game have shuffled the cards already according to the randomly configured encryption shuffling order ADCB, thereby executing step S235: broadcasting all the encrypted card face information E_{B}(1)-E_{B}(108) generated in step S231 to the clients A, C, D.

After the client B broadcasts E_{B}(1)-E_{B}(108) to the clients A, C, D, the client A executes step S14, and the clients B, C, D execute step S24:

Each client determines a plurality pieces of card face information allocated to a current user (and other users) according to a preconfigured drawing rule. Specifically, because all the clients cannot know which cards the 108 pieces of encrypted card surface information correspond to respectively at this time, 27 cards can be randomly allocated to each user according to any algorithm at this moment (obviously, the same algorithm should be used on each client) without selecting a piece of encrypted card face information by each client in turn to draw cards in turn. For example, 27 pieces of encrypted card face information such as E_{B}(3), E_{B}(4), E_{B}(7),..., E_{B}(106), etc. are allocated to the user A (all users cannot know the cards that they draw at this moment), 27 pieces of encrypted card face information such as E_{B}(1), E_{B}(5),..., E_{B}(108), etc. are allocated to the user B, 27 pieces of encrypted card face information such as E_{B}(6), E_{B}(9),..., E_{B}(104), etc. are allocated to the user C, and 27 pieces of encrypted card face information such as E_{B}(2), E_{B}(8),..., E_{B}(107), etc. are allocated to the user D.

After the encrypted card face information are allocated, the client A executes steps S15 and S16 to decrypt the encrypted card face information allocated to user A, and executes step S17 to respectively cooperate with the clients B, C, D to decrypt the encrypted card face information allocated to the users B, C, D. Similarly, the clients B, C, D execute steps S25 and S26 to decrypt encrypted card face information allocated to corresponding users, and execute step S27 to respectively cooperate with other clients to decrypt the encrypted card face information allocated to corresponding users.

Taking the client A decrypts E_{B}(3) as an example:
in step S15, the client A generates decryption request information requesting decryption of E_{B}(3) and sends same to the client D (for example, the decryption order of the decryption requests of the client A may be configured to be DCB-A, and the decryption order among the clients B, C, D may also be configured randomly);
the client D execute step S27, decrypts E_{B}(3) through p_{D} after receiving the decryption request information requesting decryption of E_{B}(3) sent by the client A, generates D_{D}(3)=p_{D}(E_{B}(3)), and sends the decryption request information requesting decryption of E_{B}(3) to the client C;
the client C also executes step S27, decrypts D_{D}(3) through p_{D}, generates D_{C}(3)=p_{C}(D_{D}(3)), and sends the decryption request information requesting decryption of E_{B}(3) and D_{C}(3) to the client B;
the client B also executes step S27, decrypts D_{C}(3) through p_{B}, generates D_{B}(3)= p_{B}(D_{C}(3)), and returns D_{B}(3) to the client A;
the client A executes step S16 after receiving D_{B}(3), decrypts D_{B}(3) through p_{A}, obtains hash(p_{A}+3)+3, and obtains card face information 3 after filtering scramble information hash (p_{A}+3). In this process, only the client A can know the card face information about the cards drawn by the user A through decryption in step S16, while the clients B, C, D can verify whether the cards led by the client A during the game are drawn by the user A only after the current round of game is over and all clients publish respective keys.

The decryption of the client B/C/D is the same as the above decryption. In step S25, after decryption request information are generated, the other three clients execute steps S17 or S27 in sequence and perform decryption through respective keys, and the present client executes step S26 finally, decrypts and filters the scramble information through the key held thereby to obtain card face information. The specific process will not be repeated here.

In the above embodiment, by taking the Two-liter game in which four clients play 108 cards in a round as an example, the method is exemplarily illustrated. Those skilled in the art can understand that in more embodiments, the above method may be suitable for card games of various non-dummy cards in which any number of players play any number of cards, which can achieve the same technical effect and is not limited to the above examples.

By means of the above embodiments, by respectively generating keys according to an algorithm supporting out-of-order decryption by all clients participating in a game and encryption recording same onto a block chain, respectively performing encryption shuffling on card face information of the current round of game in sequence by means of respective keys, decrypting the encrypted card face information of the current user by other clients in sequence after drawing, and decrypting by the current client finally, decentralized dealing is realized in a game scenario where only the players themselves know their cards after drawing.

Further preferably, in the methods provided in all the above embodiments, the decryption request information comprise signature information about corresponding users, the signature information being used for verifying whether illegal decryption requests sent by other clients are received after the game is over and all users publish respective keys.

For example, the decryption request information generated by the client A comprises a signature of the user A, the decryption request information generated by the client C comprises a signature of the user C, and the like. After the current round of game is over, the client A can verify whether the encrypted card face information requested to be decrypted by the decryption request information signed by the client B corresponds to cards drawn by user B: if the client B signs a request to decrypt encrypted card face information about cards drawn by the user D to know cards of the user D so as to cheat, the client A can package the cheating evidence of the client B into a transaction and submit same to the block chain, so the deposit of the user B may be deducted after the game contract on the block chain judges that the client B cheats and the users A, C, D may be compensated (or may not be compensated according to actual demands).

In the above embodiment, further, by attaching the signature of the current user when requesting other clients to decrypt, to guarantee that illegal decryption requests may be checked after all users publish respective keys, cheating in the decryption stage is avoided.

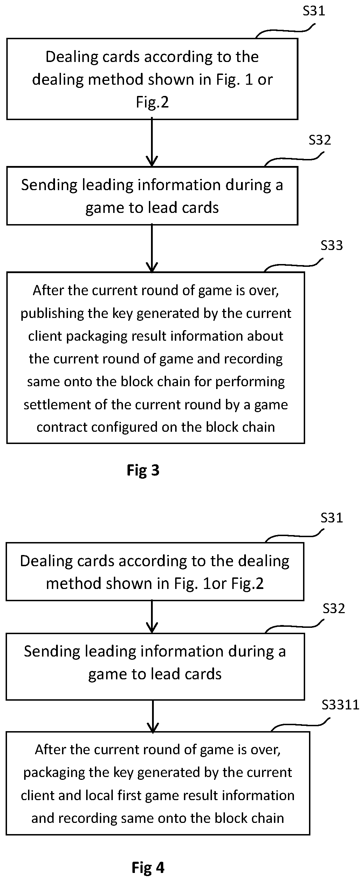

Fig. 3 is a flow chart of a method for a game provided in one embodiment of the present invention. As shown in Fig. 3, in this embodiment, the present invention further provides a method for a game, comprising the following steps:
S31: dealing cards according to any one of the above dealing methods;
S32: sending leading information during a game to lead cards, wherein the leading information comprise first card face information about the led cards, first encrypted card face information generated by shuffling the first card face information by all the clients participating in the current round of game in sequence, and signature information about a current user;
S33: after the current round of game is over, publishing the key generated by a current client, packaging result information about the current round of game and recording same onto a block chain for performing settlement of the current round by a game contract configured on the block chain.

Specifically, in order to verify if a user cheats, after the current round of game is over, all clients need to publish respective keys. A client which has timed out and not published the key may be configured as cheating. The specific cheating handling method will not be repeated here.

Further preferably, during the game, a third party (such as a centralized server, a random client not participating in the current round of game, or the like) can be configured to monitor whether each client participating in the game has timed out (for example, disconnected, etc.), and submit the monitoring results to the block chain for settlement.

By means of the above embodiments, further, by attaching the encrypted card face information and the signature of the current user in the leading phase, to guarantee that illegal leading of a user may be checked after all users publish respective keys, cheating in the leading stage is avoided.

Fig. 4 is a flow chart of one preferred embodiment of the method shown in Fig. 3. As shown in Fig. 4, in one preferred embodiment, step S33 comprises:

S3311: packaging the key generated by the current client and local first game result information and recording same onto the block chain.

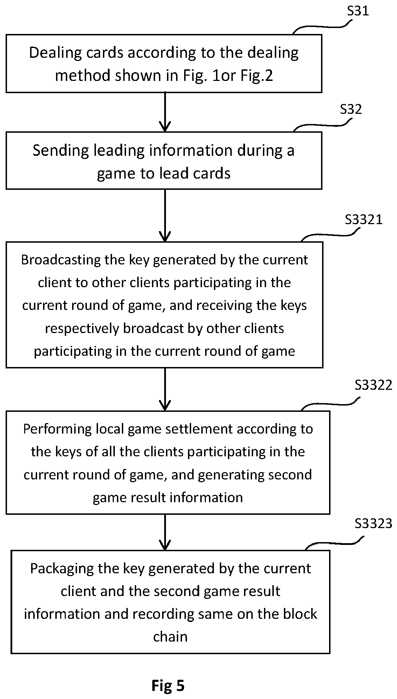

Fig. 5 is a flow chart of another preferred embodiment of the method shown in Fig. 3. As shown in Fig. 5, in another preferred embodiment, step S33 comprises:
S3321: broadcasting the key generated by the current client to other clients participating in the current round of game, and receiving the keys respectively broadcast by other clients participating in the current round of game;
S3322: performing local game settlement according to the keys of all the clients participating in the current round of game, and generating second game result information;
S3323: packaging the key generated by the current client and the second game result information and recording same onto the block chain.

Specifically, the method for a game shown in Fig. 4 is different from the method for a game shown in Fig. 5 in that: in the method shown in Fig. 4, in step S33, the clients only package keys and game data locally and submit same to the block chain, and the block chain performs settlement; while in the method shown in Fig. 5, in step S33, the clients broadcast keys mutually and perform local settlement, package and submit the keys and settlement results to the block chain, the block chain only performs checking calculation when the settlement results submitted by all the clients are inconsistent without performing settlement when the settlement results submitted by all the clients are consistent.

By means of some embodiments of the present invention, further, by performing local settlement according to keys locally broadcast mutually before submitting game results to the block chain, the calculation amount of the game contract on the block chain is reduced, and the performance of a decentralized game system is further improved.

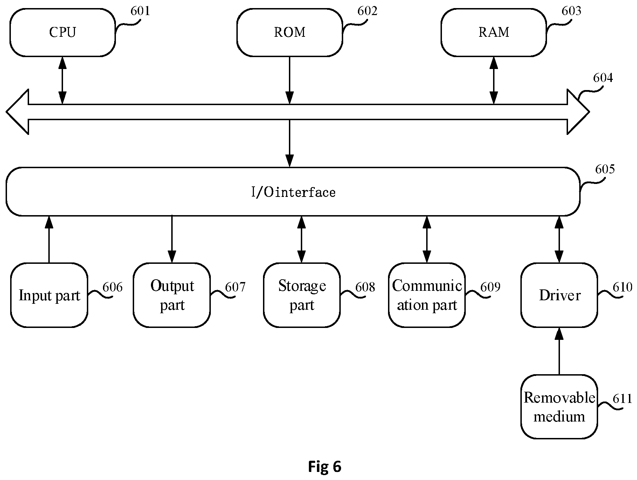

Fig. 6 is a structural schematic diagram of a device provided in one embodiment of the present invention.

As shown in Fig. 6, in another aspect, the present application also provides a device 600 which comprises one or more central processing units (CPU) 601 which can execute various appropriate actions and processing according to programs stored in a read-only memory (ROM) 602 or programs loaded into a random access memory (RAM) 603 from a storage part 608. Various programs and data required for operation of the device 600 are also stored in the RAM 603. The CPU 601, the ROM 602 and the RAM 603 are mutually connected through a bus 604. An input/output (I/O) interface 605 is also connected to the bus 604.

The following components are connected to the I/O interface 605: an input part 606 comprising a keyboard and a mouse; an output part 607 comprising a cathode ray tube (CRT), a liquid crystal display (LCD) and a loudspeaker; the storage part 608 comprising a hard disk; and a communication part 609 comprising network interface cards such as LAN cards and modulation demodulators. The communication part 609 executes communication processing through a network such as Internet. A driver 610 is also connected to the I/O interface 605 as required. A removable medium 611, such as a disk, a CD, a magneto-optical disc and a semiconductor memory, is installed on the driver 610 as required, which is convenient for installing computer programs which are read from the removable medium into the storage part 608 as required.

Particularly, according to the disclosed embodiments, the method described in any of the above embodiments can be realized as a computer software program. For example, the disclosed embodiment comprises a computer program product which comprises computer programs tangibly included on a machine readable medium. The computer programs include program codes used for executing the above methods. In this embodiment, the computer programs can be downloaded and installed from the network through the communication part 609, and/or installed from the removable medium 611.

In another aspect, the present application also provides a computer readable storage medium. The computer readable storage medium may be the computer readable storage medium included in the device of the above embodiment, and may be a computer readable storage medium which exists individually and is not assembled into the device. The computer readable storage medium stores one or more programs. The programs are used by one or more processors to execute the method described in the present application.

Flow charts and block diagrams in the drawings show realizable architectures functions and operation of the system, the method and the computer program product according to various embodiments of the present invention. In this regard, each block in the flow charts or block diagrams can represent a part of a module, a program segment or codes; and the part of the module, the program segment or the codes includes one or more executable instructions for realizing specified logical functions. It should also be noted that in some alternative implementations, the functions indicated in the blocks may also occur in a sequence different from that indicated in the drawings. For example, two blocks that are indicated continuously can actually be executed essentially concurrently, and sometimes can also be executed in reverse order, depending on the involved functions. It should also be noted that each block in the block diagrams and/or flow charts and combinations of the blocks in the block diagrams and/or flow charts can be realized by a hardware-based system specially used for executing specific functions or operation or realized by combinations of special hardware and computer instructions.

Units or modules described in the embodiments of the present application can be realized by software, or realized by hardware. The described units or modules can also be arranged in the processor. For example, each of the units can be a software program which is set in a computer or mobile intelligent device, or an individually configured hardware device. The names of these units or modules do not limit the units or modules in any way.

The above illustration is only the explanation of preferred embodiments of the present application and the used technical principles. Those skilled in the art shall understand that the invention scope involved in the present application is not limited to the technical solution formed by the specific combination of the above technical features, and shall also be covered in other technical solutions formed by any combination of the above technical features or equivalent features without departing from the concept of the present application, e.g., the technical solutions formed by mutual replacement of the above features and (but not limited to) technical features with similar functions disclosed the present application.

## Claims

1. A dealing method, comprising the following steps:
generating a first key by means of an algorithm supporting out-of-order decryption, and recording a hash value of the first key onto a block chain, wherein other clients participating in the current round of game respectively generate keys by means of the algorithm and record the hash values of the generated keys onto the block chain;
generating a plurality pieces of card face information and corresponding scramble information, and respectively encrypting all the card face information and the corresponding scramble information by means of the first key to generate a plurality pieces of encrypted card face information that are encrypted for the first time;
sending each encrypted card face information to another client participating in the current round of game for reshuffling by other clients participating in the current round of game in sequence, until all clients participating in the current round of game complete shuffling, wherein the reshuffling comprises: respectively encrypting all the received encrypted card face information by means of the key generated according to the algorithm;
receiving each encrypted card face information broadcast after the client which shuffles finally in the current round of game completes reshuffling, and determining a plurality pieces of card face information allocated to a current user according to a preconfigured drawing rule;
generating a plurality pieces of first decryption request information according to all the allocated encrypted card face information and sending same to another client participating in the current round of game for decryption by other clients participating in the current round of game in sequence by means of the key generated according to the algorithm, and returning a plurality of first decryption results by the client performing decryption finally of other clients;
decrypting all the first decryption results by means of the first key, identifying and filtering the scramble information to acquire each card face information allocated to the current user;
receiving a plurality pieces of second decryption request information sent by other clients participating in the current round of game, decrypting the second decryption request information by means of the first key to generate second decryption results, and sending same to the next client.

2. The method according to claim 1, **characterized in that**: the first decryption request information and the second decryption request information respectively comprise signature information about corresponding users, the signature information being used for verifying whether illegal decryption requests sent by other clients are received after the game is over and all users respectively publish respective keys generated according to the algorithm.

3. A dealing method, comprising the following steps:
generating a second key by means of an algorithm supporting out-of-order decryption, and recording a hash value of the second key onto a block chain, wherein other clients participating in the current round of game respectively generate keys by means of the algorithm and record the hash values of the generated keys onto the block chain;
receiving a plurality of pieces of encrypted card face information sent by another client participating in the current round of game, wherein the encrypted card face information are encrypted card face information that are encrypted for the first time or encrypted card face information that are re-encrypted; the encrypted card face information that are encrypted for the first time are generated by generating a plurality of card face information and corresponding scramble information by the first client initiating shuffling in the current round of game, and respectively encrypting all the card face information and the corresponding scramble information by means of the first key generated according to the algorithm, and are sent to another client participating in the current round of game for reshuffling by other clients participating in the current round of game in sequence; the reshuffling comprises: respectively encrypting all the received encrypted card face information by means of the key generated according to the algorithm, and generating encrypted card face information that are re-encrypted;
respectively encrypting all the received encrypted card face information by means of the second key, and judging whether all the clients participating in the current round of game complete shuffling;
if not, sending all the encrypted card face information encrypted by means of the second key to the next client which does not complete shuffling in the current round of game for reshuffling, and waiting to receive all the encrypted card face information broadcast after the client which shuffles finally in the current round of game completes reshuffling;
if yes, broadcasting all the encrypted card face information encrypted by means of the second key to all the clients participating in the current round of game;
determining a plurality pieces of card face information allocated to a current user according to a preconfigured drawing rule;
generating a plurality pieces of third decryption request information according to all the allocated encrypted card face information and sending same to another client participating in the current round of game for decryption by other clients participating in the current round of game in sequence by means of the key generated according to the algorithm, and returning a plurality of third decryption results by the client performing decryption finally of other clients;
decrypting all the third decryption results by means of the second key, identifying and filtering the scramble information to acquire each card face information allocated to the current user;
receiving a plurality pieces of fourth decryption request information sent by other clients participating in the current round of game, decrypting the fourth decryption request information by means of the second key to generate fourth decryption results, and sending same to the next client.

4. The method according to claim 3, **characterized in that**: the third decryption request information and the fourth decryption request information respectively comprise signature information about corresponding users, the signature information being used for verifying whether illegal decryption requests sent by other clients are received after the game is over and all users respectively publish respective keys generated according to the algorithm.

5. A method for a game, comprising the following steps:
dealing cards according to the dealing method of any one of claims 1-4 after the game is started;
sending leading information during a game to lead cards, wherein the leading information comprise first card face information about the led cards, first encrypted card face information generated by shuffling the first card face information by all the clients participating in the current round of game in sequence, and signature information about a current user;
after the current round of game is over, publishing the key generated by a current client, packaging the result information about the current round of game and recording same onto a block chain for performing settlement of the current round by a game contract configured on the block chain.

6. The method according to claim 5, **characterized in that**: after the current round of game is over, publishing the key generated by the current client, packaging result information about the current round of game and recording same onto the block chain comprise:
packaging the key generated by the current client and local result information about the current round of game and recording same onto the block chain.

7. The method according to claim 5, **characterized in that**: after the current round of game is over, publishing the key generated by the current client, packaging result information about the current round of game and recording same onto the block chain comprise:
broadcasting the key generated by the current client to other clients participating in the current round of game, and receiving the keys respectively broadcast by other clients participating in the current round of game;
performing local game settlement according to the keys of all the clients participating in the current round of game, and generating second game result information;
packaging the key generated by the current client and the second game result information and recording same on the block chain.

8. A device for a game, **characterized in that**: the device comprises:
one or more processors;
a memory configured to store one or more procedures;
wherein when the one or more procedures are executed by the one or more processors, the one or more processors execute the dealing method of any one of claims 1-4 or the method for a game of any one of claims 5-7.

9. A storage medium storing computer programs, **characterized in that**: the programs, when executed by a processor, realize the method of any one of claims 1-7.
